# EUROPEAN PATENT SPECIFICATION

(11) **EP 0 086 178 B1**
(45) Date of publication and mention of the grant of the patent: **01.06.1994**
(21) Application number: 83830021.8
(22) Date of filing: 01.02.1983
(51) Int. Cl.: H02B 1/46

(54) **Socket assembly structure**
Baueinheit mit Anzapfung
Ensemble à prise de courant

(30) Priority: 08.02.1982 IT 2074682 U
(43) Date of publication of application: 17.08.1983
(73) Proprietor: ELECA S.P.A., Cantu' (CO) (IT)
(72) Inventor: Manzoni, Roberto, I-22063 Cantu'(Como) (IT); Scanziani, Piercarlo, I-22063 Cantu'(Como) (IT)
(74) Representative: Pizzoli, Pasquale Vincenzo

(56) References cited:
- FR-A- 1 117 080
- GB-A- 773 341
- US-A- 4 265 365

## Description

The present invention relates to an outlet assembly structure.

As it is known, the presently commercially available highly protected interconnected or interlocked outlets or sockets have a comparatively intricate and expensive construction.

Moreover, the outlet assemblies are presently mounted either in recessed housings or on walls, and therefore they are generally constructed with either one or the other of two configurations which require two different production lines, since it is necessary to differently construct the bodies or outer frames for housing the circuit breaker and outlets or sockets. For example the US Patent 4.265.365 to Boteler discloses a moisture resistant outlet box comprising a rear box-like body, housing the electrical fixtures, and a front coverplate tightly closing it. This box is specifically designed for being mounted in a recess of a wall, and can not be mounted on a wall surface.

The GB Patent 773.341, on the other hand, discloses a housing for miniature electric breakers wherein, in the thickness of the casing, semihexagonal grooves are provided communicating with short fixing holes which terminate at the top and bottom faces of the casing. This casing, which can exclusively be mounted on a board, requires, moreover, that the rear face of the board be accessible.

Thus, the task of the present invention is to overcome the thereinabove mentioned drawbacks by providing such an outlet assembly structure which is very flexible and made in such a way as to be effective to be mounted either in a recessed housing or on a wall, without any modifications to the component elements thereof.

Within that task, it is a primary object of the present invention to provide a substantially horizontally extending outlet assembly, which is highly protected and effective to be easily made by using standard modules.

Another object of the present invention is to provide an outlet assembly structure, the outlets whereof are either interconnected or not, which is very safe and reliable in operation.

Yet another object of the present invention is to provide an outlet assembly structure, the outlets whereof are either interconnected or not, which may be easily made starting from easily commercially available materials and which, in addition, is advantageous from a mere economic standpoint.

According to one of the aspects of the present invention the thereinabove mentioned task and objects, as well as yet other objects which will become more apparent thereinafter, are achieved by an outlet assembly structure, the outlets whereof are either interconnected or not, according to the claim.

Further characteristics and advantages will become more apparent hereinafter from the following detailed description of an outlet assembly structure, the outlets whereof are either interconnected or not, depending on the load type, in the horizontal direction, being illustrated by way of a not limitative example in the accompanying drawing where:

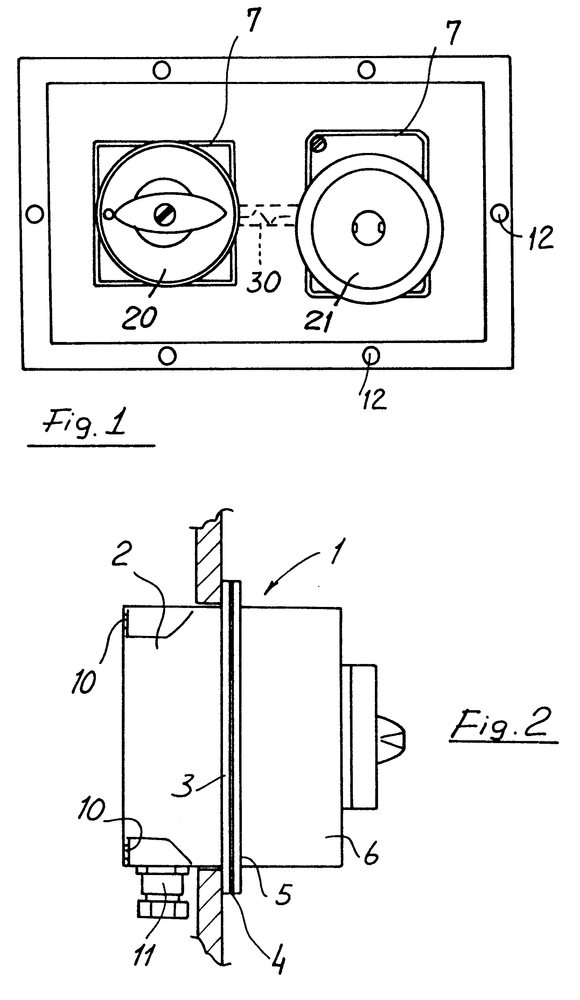

fig.1 illustrates the outlet assembly as seen from the front side;
fig.2 is a side partially broken away view illustrating the subject outlet assembly, the outlets whereof may be either interconnected or not; and
fig.3 illustrates an outlet assembly provided with a housing effective to house protecting devices.

With reference to the reference numerals of the mentioned figures, the outlet assembly structure, the outlets whereof may be either interconnected or not, according to the present invention, comprises a frame, generally indicated at 1, which consists of a rear box-like body 2 which, at the open face thereof, is provided with a front flange 3 effective to be coupled, with the interposition of a sealing gasket 4, to a matching rear flange 5 defined at the open rear face of a front body 6 which latter, on the front face whereof, is provided with windows 7 for housing the electrical components which will be described thereinafter.

The mentioned rear body 2 is provided, on the rear side, at the edges whereof, with holes 10 effective to allow for the outlet assembly to be mounted on a wall, as it is desired.

Moreover, at said body 2 there is also provided a cable sealing or gripping member 11 which, depending on the needs, may be located either at the bottom or at the top.

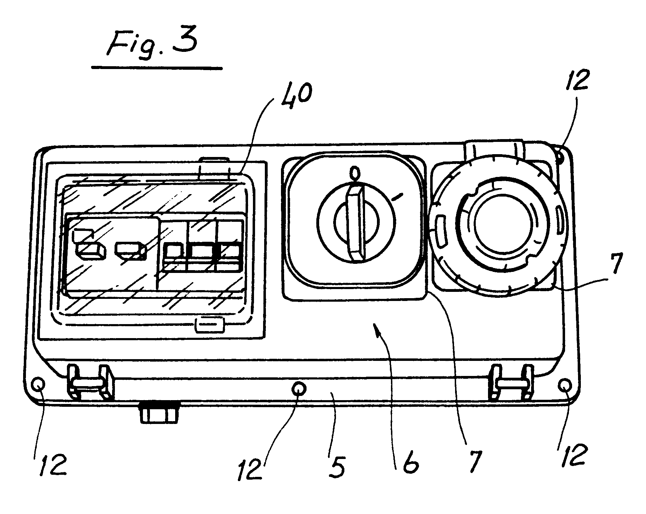

Through the flanges zones 3 and 5 through holes 12 are provided which, in addition to providing the tight coupling of the rear body 2 and front body 6, allow for the outlet assembly to be mounted in a recess or opening in a wall or panel, as it is schematically illustrated in fig.2.

In said windows 7 there are housed one or more pack circuit breakers, provided with the related fuses, or an automatic lockable modular breaker, indicated schematically at 20, which are either interlocked or not with one or more recessed taps 21, which latter are also housed in the corresponding windows 7.

As an optional feature of the present invention there is provided a mechanical breaker or switch assembly an interlock or interconnecting member being, indicated at 30 effective to carry out the horizontal interlocking or interconnecting between said breaker and outlet.

Moreover, as it is shown in figure 3, it is possible to provide, adjoining the windows 7, a recess 40 for housing protecting and signalling devices such as magnetothermic automatic circuit breakers, and the like.

It should be obviously noted that the number of outlets, as well as that of the breakers, may be varied at will, depending on the contingent needs.

The outlet assembly according to the present invention, the outlets whereof may be either interconnected or not, may be used in a very simple way which is substantially similar to that of the conventional outlets; on the other hand, the invention provides a very flexible outlet assembly which, without any constructional modifications, may be mounted either on a wall or in a recessed housing, since the provision of the flanges 3 and 5, therebetween there are clamped the bodies 2 and 6, is effective to provide a structural frame, for the recessed mounting, without unduly obstructing the wall mounting which is carried out, as it has been thereinabove indicated, by means of the holes 10 formed through the bottom of the body 2.

From the above disclosure it will be clear that the invention fully achieves the intended objects.

In particular, it is to be pointed out that an outlet assembly has been provided which is highly protected and provided with a horizontal constructionally simple interlocking.

In practising the invention the used materials, as well as the contingent size and shapes may be any depending on the needs.

## Claims

1. An outlet assembly structure, the outlets whereof are either interconnected or not, comprising a rear box-like body (2) having a flange (3) encompassing the open front face thereof, characterized in that the structure further comprises a front box-like body (6) having a flange (5) at the rear face thereof matching the flange (3) of the rear box-like body, said front box-like body having, on the front face thereof, windows (7) for housing at least an outlet (21), said rear box-like body (2) comprising, through its rear face, holes (10) for surface mounting said outlet assembly structure on a wall, said flanges (3, 5) being further provided with throughgoing holes (12) for tight coupling said rear (2) and front (6) bodies together and for mounting said outlet assembly in a recess or opening in a wall or panel.

## Patentansprüche

1. Auslaßanordnungs-Konstruktion, deren Auslässe entweder miteinander verbunden oder nicht miteinander verbunden sind und die einen hinteren kastenartigen Körper (2) aufweist, der einen seine offene Vorderseite umgreifenden Flansch (3) hat,
dadurch gekennzeichnet,
daß die Konstruktion ferner einen vorderen kastenartigen Körper (6) aufweist, der an seiner Rückseite einen Flansch (5) hat, der zu dem Flansch (3) des hinteren kastenartigen Körpers paßt,
wobei der vordere kastenartige Körper an seiner Vorderseite Fenster (7) hat, um mindestene einen Auslaß (21) aufzunehmen, wobei der hintere kastenartige Körper (2) in seiner Rückseite hindurchgehende Löcher (10) zur Aufputzmontage der Auslaßanordnungs-Konstruktion an einer Wand aufweist,
wobei die Flansche (3, 5) ferner mit Durchgangslöchern (12) versehen sind, um den hinteren Körper (2) und den vorderen Körper (6) dicht miteinander zu verbinden und um die Auslaßanordnung in einer Aussparung der Öffnung in einer Wand oder Platte zu montieren.

## Revendications

1. Structure de montage de sortie dont les sorties sont interconnectées ou non, comprenant un corps arrière (2) analogue à une boîte et muni d'un rebord (3) entourant sa face avant,
caractérisé en ce qu'il comprend en outre un corps avant (6) analogue à une boîte et muni à sa face arrière d'un rebord (5) coopérant avec le rebord (3) du corps arrière, ledit corps avant présentant sur sa face avant des fenêtres (7) pour le logement d'au moins une sortie (21), ledit corps arrière (2) comportant, traversant sa face arrière, des trous (10) pour le montage en surface de ladite structure de sortie sur une paroi, les rebords (3 et 5) étant en outre munis de trous traversants (12) pour permettre un assemblage serré des deux corps arrière (2 ) et avant (6) l'un à l'autre et un montage de la structure de sortie dans un évidement ou une ouverture d'une paroi ou d'un panneau.
